# EUROPÄISCHE PATENTANMELDUNG

(11) **EP 3 441 712 A1**
(43) Veröffentlichungstag der Anmeldung: **13.02.2019**
(21) Anmeldenummer: 17185223.9
(22) Anmeldetag: 08.08.2017
(51) Int. Cl.: G01B 11/00, G01B 11/24

(54) **KOORDINATEN-MESSVORRICHTUNG MIT OPTISCHEM SENSOR UND ENTSPRECHENDES VERFAHREN**

(71) Anmelder: Klingelnberg AG, 8050 Zürich (CH)
(72) Erfinder: Mies, Georg, 51688 Wipperführt (DE)
(74) Vertreter: Heusch, Christian

(57) **Zusammenfassung**

Koordinaten-Messvorrichtung (10) mit mindestens einer gesteuerten Achse (A1, X1, Y1, Z1), mit einer Aufnahme (13, 14) für ein zu messendes Zahnrad-Bauteil (11), die um eine der als Rotationsachse (A1) dienenden Achsen drehantreibbar ist, mit einem Winkelsensor (16) und mit einer Messanordnung (17). Die Koordinaten-Messvorrichtung (10) ist dazu ausgelegt mittels der mindestens einen gesteuerten Achse (A1, X1, Y1, Z1) Bewegungen der Messanordnung (17) relativ zum Zahnrad-Bauteil (11) auszuführen. Die Messanordnung (17) umfasst einen optischen, berührungslos arbeitenden Sensor (20), der als Mess-Sensor ausgelegt und so an der Messanordnung (17) angeordnet ist, dass er in der Lage ist einen Lichtstrahl (LS) in Richtung des Zahnrad-Bauteils (11) auszusenden. Der genannte Winkelsensor (16) ist dazu ausgelegt ein drehwinkelspezifisches Signal (sA1) in Abhängigkeit der Drehposition der Aufnahme (13, 14) in Bezug zur Rotationsachse (A1) zu liefern, und der Mess-Sensor ist durch das drehwinkelspezifische Signal (sA1) in einem aktiven Zustand betreibbar.

## Beschreibung

Die Erfindung betrifft eine Koordinaten-Messvorrichtung mit optischem Sensor und ein entsprechendes Verfahren zum optischen Messen von Zahnrad-Bauteilen.

### HINTERGRUND DER ERFINDUNG

In vielen technischen Bereichen ist das exakte Vermessen eines Bauteils von großer Bedeutung.

Es gibt z.B. verschiedene Messvorrichtungen zum taktilen Erfassen der Beschaffenheit und des Profils von Oberflächen. Typischerweise wird bei der mechanischen Abtastung eine Tastspitze über die zu vermessende Oberfläche geführt. Das Ergebnis ist ein über den Tastweg aufgezeichnetes Signal, das Aussagen über das Oberflächenprofil zulässt.

Es besteht der Bedarf derartige Messungen möglichst schnell und genau im Rahmen eines Produktionsprozesses vorzunehmen, wobei die erwähnte mechanische Abtastung zwar sehr genau aber leider auch recht langsam ist. Zur Integration in einen Produktionsablauf eignet sich das mechanische Messen daher in den meisten Fällen nicht. Heute kommen mechanisch abtastende Messverfahren daher z.B. zum Einsatz, um einzelne Bauteile aus einer Serienproduktion exemplarisch zu prüfen, um dann bei Abweichungen korrigierend in den laufenden Produktionsprozess eingreifen zu können.

Auf den ersten Blick könnte das optische Messen eine Alternative zu dem mechanischen Messen darstellen. Ideal wäre hier der Einsatz optisch messender Sensoren. Es hat sich jedoch gezeigt, dass sich die optisch messenden Sensoren aus verschiedenen Gründen für die Anforderungen an die Verzahnungsmessung nur bedingt eignen. Die besonderen Anforderungen oder Kriterien, die bei einer Verzahnungsmessung gelten, sind:
- ungünstige Antastwinkel,
- glatte Oberflächen z.B. der Zahnflanken,
- Abschattung durch benachbarte Zähne,
- hohe Anforderungen an die Messgenauigkeit (im Bereich von 0,1 - 0,5 Mikrometern),
- Verschmutzungsprobleme (z.B. durch Öl),
- Zerstörungsgefahr des Sensors bei einer Kollision mit einem Zahn des zu messenden Bauteils, und
- störende Brechungs- oder Reflektionseffekte z.B. durch Mehrfachreflexionen in engen Zahnlücken.

Die bekannten optisch arbeitenden, interferometrischen Sensoren sind sehr genau und haben eine sehr hohe Auflösung. Bei diesem Sensortyp muss der Abstand zur Oberfläche allerdings klein und der Akzeptanzwinkel sehr gering sein. Das bedeutet, dass man um diese Sensoren einsetzen zu können mit dem Sensorende in die Zahnlücke eintauchen muss. Für eine schnelle Messung ist es aber vorteilhaft, wenn sich der Sensor außerhalb der Zahnlücke befindet. Ausserdem sind solche interferometrischen Sensoren sehr teuer.

Sensoren, die nach dem Prinzip eines Laser-Triangulationssensors arbeiten, haben eine hohe Messfrequenz und einen großen Akzeptanzwinkel. Die Sensoren können unterschiedliche Messbereiche, Arbeitsabstände und Auflösungen abdecken. Eine Sensoranordnung außerhalb der Zahnlücke, die für schnelle Messungen benötigt wird, ist somit möglich. Leider sind jedoch die Laser-Triangulationssensoren für Verzahnungsmessungen nur dann ausreichend genau, wenn der Messbereich klein (2-5mm) und der Messabstand gering ist (10-50mm).

Konfokal-Chromatische optische Sensoren haben eine hohe Auflösung, benötigen aber eine große numerische Apertur, wenn man die oben genannten Bedingungen erfüllen möchte. Dadurch entsteht ein breiter Lichtkegel. Will man Abschattungen des Lichtkegels an benachbarten Zähnen vermeiden, entstehen bei der Verzahnungsmessung ungünstige steile Antastwinkel. Bei einem steilen Antastwinkel empfängt der Sensor jedoch kein brauchbares reflektiertes Lichtsignal.

Es besteht der Bedarf schnelle Verzahnungsmessungen, z.B. im Rahmen der Produktion von Zahnrad-Bauteilen, vornehmen zu können, um idealerweise jedes einzelne Zahnrad-Bauteil während oder unmittelbar nach der Produktion prüfen zu können.

Es ist eine Aufgabe der Erfindung eine Vorrichtung und ein entsprechendes Verfahren bereit zu stellen, dass es ermöglicht schnelle und präzise Messungen an Zahnrad-Bauteilen vorzunehmen.

Insbesondere Messaufgaben, die eine lange Messzeit haben und sehr häufig an Verzahnungen durchgeführt werden, sollten durch die Vorrichtung und das Verfahren der Erfindung schneller durchgeführt werden.

Eine solche Messaufgabe ist z.B. die Teilungsmessung, bei der der Abstand von Zahnflanke zu Zahnflanke bestimmt wird.

Die Aufgabe wird durch eine Koordinaten-Messvorrichtung gemäß Anspruch 1 und durch ein Verfahren gemäß Anspruch 12 gelöst.

Eine erfindungsgemäße Koordinaten-Messvorrichtung umfasst mindestens eine (NC-)gesteuerte Achse, eine drehantreibbare Aufnahme für ein zu messendes Zahnrad-Bauteil und eine Messanordnung, wobei die Koordinaten-Messvorrichtung dazu ausgelegt ist relative Bewegungen (Zustellbewegungen und/oder Messbewegungen) der Messanordnung relativ zum Zahnrad-Bauteil auszuführen. Die erfindungsgemäße Koordinaten-Messvorrichtung umfasst weiterhin einen Winkelsensor und sie zeichnet sich dadurch aus, dass,
- die Messanordnung einen optischen, berührungslos arbeitenden Sensor umfasst, der als Mess-Sensor ausgelegt und so an der Messanordnung angeordnet ist, dass er in der Lage ist einen Lichtstrahl entlang einer optischen Achse in Richtung einer Objektebene des Zahnrad-Bauteils auszusenden, wenn sich dieses Zahnrad-Bauteil in der Aufnahme befindet,
- der Winkelsensor dazu ausgelegt ist ein drehwinkelspezifisches Signal in Abhängigkeit der Drehposition der Aufnahme um eine als Rotationsachse dienende Achse zu liefern, und dass
- der Mess-Sensor durch das drehwinkelspezifische Signal in einen aktiven Zustand schaltbar ist.

Relative Zustellbewegungen können bei allen Ausführungsformen Bewegungen sein, die erforderlich sind, um z.B.
- das Zahnrad-Bauteil durch ein Drehantreiben der Aufnahme um eine als Rotationsachse dienende gesteuerte Achse in eine geeignete Ausgangswinkelposition zu drehen (z.B. durch eine Drehbewegung einer A1-Achse),
- den relativen Abstand zwischen dem Zahnrad-Bauteil, respektive der Objektebene des Zahnrad-Bauteils und dem Mess-Sensor einzustellen (z.B. durch eine Linearbewegung einer Y1-Achse),
- das Zahnrad-Bauteil relativ zu dem Mess-Sensor in eine geeignete Höhenposition zu bringen (z.B. durch eine Linearbewegung einer Z1-Achse),
- das Zahnrad-Bauteil relativ zu dem Mess-Sensor in eine geeignete Horizontalposition zu bringen (z.B. durch eine Linearbewegung einer X1-Achse).

Es können bei allen Ausführungsformen auch zwei oder mehr als zwei der beispielhaft genannten Zustellbewegungen ausgeführt werden, um den Mess-Sensor in eine Startposition relativ zu einer zu messenden Objektebene des Zahnrad-Bauteils zu bringen.

Je nach Messverfahren, können Ausführungsformen optional auch Messbewegungen ausgeführt werden, die erforderlich sind, um z.B.
- das Zahnrad-Bauteil relativ zum Mess-Sensor zu drehen (z.B. durch eine Drehbewegung um die A1-Achse), während der Mess-Sensor zum Einsatz kommt,
- das Zahnrad-Bauteil relativ zum Mess-Sensor zu verlagern, während der Mess-Sensor zum Einsatz kommt.

Es können bei allen Ausführungsformen auch zwei oder mehr als zwei der beispielhaft genannten Messbewegungen ausgeführt werden.

Vorzugsweise ist eine Vorrichtung der Erfindung mit mindestens einer (NC-)gesteuerten Achse ausgestattet, wobei es sich z.B. um eine Rotationsachse zum Drehantreiben des Zahnrad-Bauteils relativ zum Mess-Sensor handeln kann.

Die Erfindung beruht auf dem Einsatz mindestens eines optischen Mess-Sensors, der eine hochgenaue und schnelle Abstandsermittlung ermöglicht, indem dieser Sensor oder eine nachgeordnete Schaltung, getriggert durch ein drehwinkelspezifisches Signal, jeweils nur dann ein Messsignal liefert, wenn das Zahnrad-Bauteils relativ zum Mess-Sensor eine vorbestimmte Winkelposition erreicht.

Vorzugsweise wird der Mess-Sensor mindestens bei einem Teil der Ausführungsformen in Abhängigkeit von der Winkelposition des Zahnrad-Bauteils an und aus geschaltet. Im angeschalteten Zustand ist der Mess-Sensors aktiv. D.h. in diesem Zustand erfasst er optische Signale, die von der zu messenden Objektebene des Zahnrad-Bauteils reflektiert wurden. D.h. der Mess-Sensor wird als getastet arbeitender optischer Mess-Sensor verwendet.

Vorzugsweise ist der Mess-Sensor mindestens bei einem Teil der Ausführungsformen so ausgelegt oder ausgestattet, dass das Messsignal, das er liefert wenn sich die Objektebene in einem geeigneten Messabstand befindet, proportional ist zum aktuellen Abstand zwischen dem Mess-Sensor und der Objektebene.

Der Mess-Sensor kann mindestens bei einem Teil der Ausführungsformen so ausgelegt oder ausgestattet sein, dass er direkt oder indirekt durch ein drehwinkelspezifisches Signal aktiviert wird, um im aktivierten Zustand einen Lichtstrahl in Richtung der Objektebene auszusenden und um reflektierte Anteile dieses Lichtstrahl zu empfangen, um das Messsignal zu liefern.

Der Mess-Sensor kann mindestens bei einem Teil der Ausführungsformen aber auch so ausgelegt oder ausgestattet sein, dass er direkt oder indirekt durch ein drehwinkelspezifisches Signal aktiviert wird, um im aktivierten Zustand reflektierte Anteile eines Lichtstrahl zu empfangen, um das Messsignal zu liefern. In diesem Fall sendet der Mess-Sensor permanent einen Lichtstrahl aus, während das Empfangen und/oder Verarbeiten reflektierter Anteile des Lichtstrahls nur im aktivierten Zustand des Mess-Sensors erfolgt. In diesem Fall wird ein Lichtstrahl quasi permanent ausgesendet, während das Empfangen und/oder Verarbeiten an- und abgeschaltet wird.

Der Nennabstand des Mess-Sensors kann mindestens bei einem Teil der Ausführungsformen beispielsweise im Bereich von 5 bis 50 mm liegen.

Der Messbereich des Mess-Sensors kann mindestens bei einem Teil der Ausführungsformen beispielsweise im Bereich von ±0,3 mm liegen.

Die Koordinaten-Messvorrichtung der Erfindung ermöglicht eine hochgenaue Positionierung mindestens der Drehachse (wobei diese oder mehrere der Achsen der Koordinaten-Messvorrichtung NC-gesteuert sein können).

In dem Moment, in dem der optische Mess-Sensor aktiviert wird, erfasst dieser reflektiertes Licht, um dann sofort, oder mit einer Verarbeitungsverzögerung das Mess-Signal bereitzustellen.

Aus dem Mess-Signal kann optional bei allen Ausführungsformen der aktuelle Abstand zwischen dem Mess-Sensor und der Objektebene und/oder die aktuelle Winkelposition der Objektebene quantitativ ermittelt werden.

Aus dem Mess-Signal kann optional bei allen Ausführungsformen der aktuelle Abstand zwischen dem Mess-Sensor und der Objektebene und/oder die aktuelle Winkelposition der Objektebene qualitativ ermittelt werden.

Bevorzugt sind Ausführungsformen der Erfindung, deren Messverfahren möglichst nur eine geringe Anzahl an relativen Zustell- und/oder Messbewegungen gepaart mit einer oder mehreren Vollumdrehungen des Zahnrad-Bauteils umfasst. Solche Ausführungsformen nutzen die hohe Geschwindigkeit des getastet arbeitenden optischen Mess-Sensors.

Besonders bevorzugt sind Ausführungsformen der Erfindung, deren Messverfahren darauf beruht, dass das Zahnrad-Bauteil drehangetrieben wird, während der optische Mess-Sensor nur in bestimmten Winkelpositionen oder - bereichen Messungen vornimmt.

Vorzugsweise muss der Mess-Sensor nicht durch relative Zustellbewegungen jeweils Messpunkt für Messpunkt in einen geeigneten Nennabstand gebracht werden, sondern der Nennabstand wird während einer gesamten Messprozedur beibehalten.

Bisher hat eine taktile Teilungsmessung an einem Zahnrad-Bauteil pro Zahnflanke mehrere Sekunden gedauert, woraus sich für das gesamte Zahnrad-Bauteil eine Messzeit von mehreren Minuten ergeben kann. Mit einer Koordinaten-Messvorrichtung der Erfindung, die mit einem optischen Mess-Sensor und einem Regelsystem in Form von Hardware und/oder Software ausgestattet ist, kann z.B. die Teilungsmessung an allen Zahnflanken desselben Zahnrad-Bauteils innerhalb von einigen Sekunden bis zu deutlich unter einer Minute erfolgen.

Das Verfahren zur erfindungsgemässen Verzahnungsmessung nutzt nicht die Änderung des Abstands des Sensors zur Oberfläche durch Bewegung des Sensors, sondern durch die kontinuierliche Drehung des Zahnrads und die geschickte Anordnung des Sensors gegenüber der Zahnrad-Oberfläche. Man nutzt somit gemäß Erfindung die besonderen Eigenschaften des Zahnrades, nämlich die sich periodisch wiederholende Annäherung der Zahnflanken auf den Lichtstrahl des Sensors zu, bei kontinuierlicher Drehung. Der Sensor wird immer dann getriggert, wenn das Zahnrad-Bauteil eine bestimmte Winkelposition erreicht hat.

Die Erfindung setzt auf eine geeignete Gesamtkonstellation, bei der sich der relative Abstand zwischen der Oberfläche des Zahnrades und dem Sensor periodisch ändert. Beim Erreichen einer bestimmten Winkelposition wird jeweils ein Triggersignal erzeugt und es wird der momentane Abstandswert, z.B in Form eines analogen Mess-Signals und/oder eines digitalen Mess-Wertes, zur weiteren Verarbeitung festgehalten. Beim eigentlichen Durchführen des Messverfahrens der Erfindung wird somit nicht auf eine Linearverschiebung des Sensors sondern auf eine kontinuierliche Drehbewegung des Zahnrad-Bauteils gesetzt.

Das Verfahren der Erfindung eignet sich besonders für eine Teilungsmessung, bei der eine schnelle, kontinuierliche Drehbewegung des Zahnrad-Bauteils durchgeführt wird, während der Sensor (mindestens zeitweise) relativ zur Rotationsachse des Zahnrad-Bauteils ruht. Damit wird eine schnelle Messwertaufnahme ermöglicht.

Ein Vorteil des erfindungsgemäßen Verfahrens für die Teilungsmessung ist, dass man Sensoren mit kleinem Messbereich verwenden kann. Es ist ausreichend, wenn der Messbereich etwas größer ist als die zu erwartende Abweichung der Zahnflankenposition von der Sollposition. Der Sensor muss auch nur in diesem kleinen Messbereich genaue Messwerte liefern. Dies ist mit verschiedenen Sensoren möglich.

Es ist ein weiterer Vorteil des erfindungsgemäßen Ansatzes, dass dieser es ermöglicht eine Messung in etwa in der Mitte zwischen dem Fußkreis und dem Kopfkreis vorzunehmen (z.B. direkt am Teilkreis). Dadurch können Abschattungen durch benachbarte Zähne weitestgehend vermieden werden und es kommt auch nicht zu störenden Reflektionen.

Es ist ein weiterer Vorteil des erfindungsgemäßen Ansatzes, dass Sensoren eingesetzt werden können, die nur einen kleinen Messbereich und in diesem Bereich eine hohe Genauigkeit aufweisen.

Ein weiterer Vorteil eines Teils der Ausführungsformen ist, dass sich die Messposition für die Teilungsmessung in der Mitte der Zahnflanke (vom Zahnfuß zum Zahnkopf gesehen) befindet und somit nicht zu flache Antastwinkel entstehen.

Ein weiterer Vorteil eines Teils der Ausführungsformen ist, dass die Antastbedingungen immer identisch sind und somit keine schwankenden Signale entstehen.

Ein weiterer Vorteil eines Teils der Ausführungsformen ist, dass der Sensor nur für den Moment des Triggerimpulses ein Messsignal liefern muss. Ein Sensor, der eine hohe kontinuierliche Abtastfrequenz gewährleistet, ist somit nicht zwingend erforderlich

Die erfindungsgemäße Vorrichtung und das Verfahren der Erfindung ermöglichen schnelle Verzahnungsmessungen, da keine Nachführung des Sensors oder gar ein Eintauchen des Sensors in die Zahnlücke erforderlich ist und man eine kontinuierliche, schnelle Drehung nutzbar macht.

Vorteilhafte Ausgestaltungen der erfindungsgemäßen Koordinaten-Messvorrichtung und des Verfahrens sind den abhängigen Ansprüchen zu entnehmen.

Die Erfindung lässt sich im Zusammenhang mit 1D-, 2D- und 3D-Oberflächen-Messungen an Zahnrädern verwenden.

### ZEICHNUNGEN

Ausführungsbeispiele der Erfindung werden im Folgenden unter Bezugnahme auf die Zeichnungen näher beschrieben.
- **FIG. 1**: zeigt eine perspektivische Ansicht einer Koordinaten-Messvorrichtung, die gemäß Erfindung mit einem optischen Mess-Sensors ausgestattet ist;
- **FIG. 2**: zeigt eine vergrößerte perspektivische Ansicht eines Teils einer Koordinaten-Messvorrichtung der Erfindung, die einen optischen Mess-Sensor umfasst;
- **FIG. 3**: zeigt eine perspektivische Ansicht einer weiteren Koordinaten-Messvorrichtung, die gemäß Erfindung mit einem optischen Mess-Sensors ausgestattet ist;
- **FIG. 4**: zeigt eine schematische Darstellung, die zum Erläutern des Grundprinzips der Erfindung dient, wobei in der obersten Zeile die Zähnezahl n, in der Zeile darunter der Winkel W in Grad, darunter ein Zahnprofil eines Zahnrad-Bauteils (hier als Zahnstange dargestellt), darunter das drehwinkelspezifische Signal sA1, in der zweituntersten Zeile das Mess-Signal und in der untersten Zeile der Teilungsfehler τ dargestellt sind;
- **FIG. 5A**: zeigt eine schematische Darstellung einer weiteren Ausführungsform der Erfindung in einer ersten Momentaufnahme;
- **FIG. 5B**: zeigt eine schematische Darstellung der Ausführungsform der Fig. 5A in einer zweiten Momentaufnahme;
- **FIG. 6**: zeigt eine schematische Darstellung einer weiteren Ausführungsform der Erfindung.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

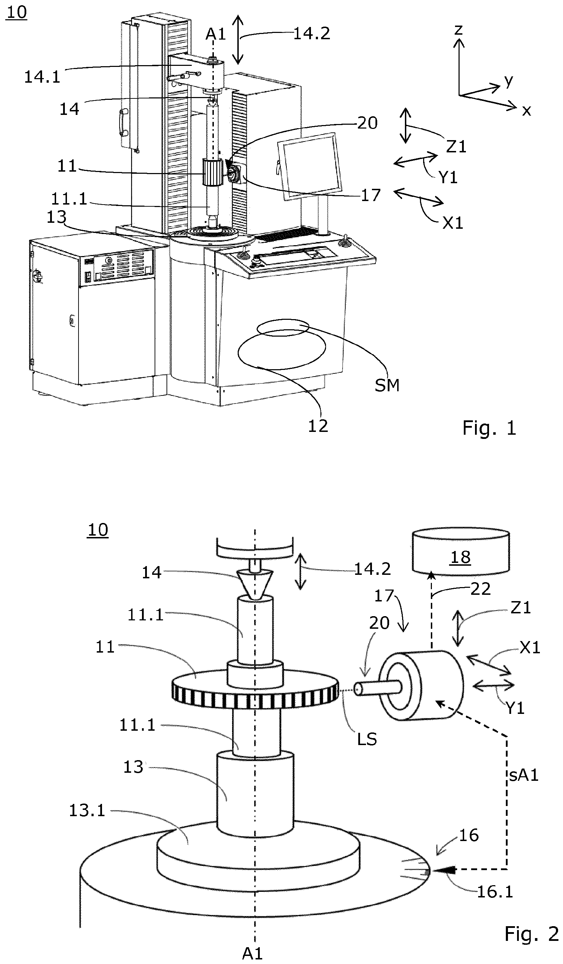

In einer ersten Ausführungsform der Erfindung, die in Fig. 1 gezeigt ist, geht es um ein automatisches, NC-gesteuertes Verzahnungsmesszentrum 10, das hier generell als Koordinaten-Messvorrichtung 10 bezeichnet wird. Die Koordinaten-Messvorrichtung 10 ist im Prinzip geeignet zum Prüfen von Stirnradverzahnungen sowie Schneid- und Schabrädern, Schnecken und Schneckenrädern, Wälzfräsern, Kegelrädern und allgemeinen Maß-, Form- und Lageabweichungen an rotationssymmetrischen Werkstücken, zur Kurven- und Nockenwellenmessung oder auch zur Rotormessung, um nur einige Einsatzmöglichkeiten aufzuzählen.

Im Rahmen der Erfindung geht es jedoch um das schnelle und zuverlässige Messen von Zahnrad-Bauteilen 11, wie Stirnräder, Kegelräder, Steckverzahnungen, Schieberäder, Kupplungselemente, Rotoren und dergleichen.

Bei allen Ausführungsformen kommt ein optischer Sensor 20 zum Einsatz, der als Mess-Sensor eingesetzt wird. Es werden die folgenden beiden Ansätze unterschieden, die, je nach Bedarf, im Rahmen aller Ausführungsformen zum Einsatz kommen können. Entweder wird der optische Sensor 20 kurzzeitig in einen aktiven Messzustand überführt, um eine optische Messung vorzunehmen, oder der optische Sensor 20 ist über einen längeren Zeitraum aktiv und es wird die Auswertung und/oder Verarbeitung der Ausgangssignale des optischen Sensors 20 kurzzeitig aktiviert. Dies geschieht in beiden Fällen mittels eines drehwinkelspezifischen Signals sA1, das direkt oder indirekt an den optischen Sensor 20 oder an eine nachgeordnete Schaltung angelegt wird.

Zusammenfassend wird hier das Aktivieren des optischen Sensors 20 und der Auswertung oder Verarbeitung der Ausgangssignale als aktiver Zustand bezeichnet.

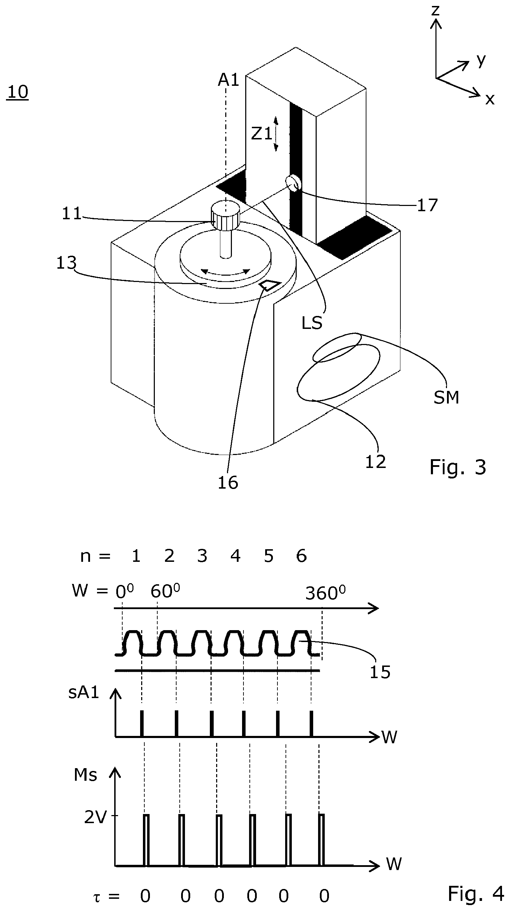

Die Koordinaten-Messvorrichtung 10 umfasst im gezeigten Beispiel einen über eine NC-Steuerung 12 antreibbaren (Dreh-)Tisch 13 und optional ein mitlaufendes Zentriermittel 14. Der (Dreh-)Tisch 13 und das mitlaufende Zentriermittel 14 sind so angeordnet, dass ein zu messendes Bauteil 11 koaxial zwischen dem (Dreh-)Tisch 13 und dem Zentriermittel 14 einspannbar ist, wie in Fig. 1 anhand eines Stirnrads 11 gezeigt. Die Zähne des Stirnrads 11 sind hier, in Fig. 2 und in Fig. 3 nur andeutungsweise gezeigt.

Das Stirnrad 11 weist im gezeigten Beispiel eine Welle 11.1 auf, die sich nach oben und unten erstreckt. Die NC-Steuerung 12 steht mit den Antriebseinheiten bzw. Motoren der verschiedenen Achsen der Koordinaten-Messvorrichtung 10 in Verbindung. Diese Details sind nicht in Fig. 1 sichtbar, da sich diese Elemente hinter einer Verkleidung befinden.

Vorzugsweise ist ein Mitnehmer (nicht dargestellt) formschlüssig mit dem (Dreh-)Tisch 13 verbunden, der durch einen Drehantrieb, gesteuert durch die NC-Steuerung 12, um eine erste Rotationsachse A1 drehbar ist. Das optionale Zentriermittel 14 kann z.B. an einem Arm 14.1 sitzen, der in der Höhe verschoben werden kann, wie durch den Doppelpfeil 14.2 angedeutet. Innerhalb des Armes 14.1 ist das mitlaufende Zentriermittel 14 so gelagert, dass es um eine vertikale Achse rotieren kann, die sich mit der Rotationsachse A1 deckt, und dass es beim Einspannen des Zahnrad-Bauteils 11 gegen eine Rückstellkraft nach oben verschoben werden kann.

Die Koordinaten-Messvorrichtung 10 der Erfindung muss nicht zwingend mit einem mitlaufenden Zentriermittel 14 oder Gegenhalter ausgestattet sein. In Fig. 3 ist ein Beispiel einer Koordinaten-Messvorrichtung 10 der Erfindung ohne Zentriermittel gezeigt. Auch kann der Aufbau des (Dreh-) Tischs 13 und die Befestigung des Zahnrad-Bauteils 11 am (Dreh-)Tisch 13, je nach Bedarf, anders ausgeführt sein.

Weitere Ausführungsformen der Erfindung sind in Fig. 2 und Fig. 3 gezeigt. Die Beschreibung der Fig. 1 ist auch auf die Figuren 2 und 3 zu übertragen.

Dem Drehtisch 13 ist bei der erfindungsgemässen Koordinaten-Messvorrichtung 10 vorzugsweise ein Winkelmesssystem 16 (Winkelgeber oder Winkelsensor) zugeordnet, das Signale sA1 bereitstellt, die eine genau Aussage über die antriebsseitige Winkelposition des Mitnehmers, respektive des (Dreh-) Tischs 13 zulässt. Das Winkelmesssystem 16 kann z.B. unterhalb des Tisches 13 angeordnet sein und ist daher in Fig. 1 nicht sichtbar. In Fig. 2 ist ein solches Winkelmesssystem 16 am rechten Rand schematisch durch eine Winkelskala mit einem schwarzen Zeiger 16.1 dargestellt, der das Signal sA1 bereitstellt und an den Sensor 20 übermittelt. Auch in Fig. 3 ist ein solches Winkelmesssystem 16 angedeutet. Das Signal sA1 wird hier als drehwinkelspezifisches Signal bezeichnet.

Dieses drehwinkelspezifische Signal sA1 kann bei allen Ausführungsformen z.B. ein einfaches Teilungssignal sein, das bei einem Zahnrad-Bauteil mit n Zähnen n Pulse ausgibt, wobei die Pulse genau mit der Soll-Winkelposition des Zahnrad-Bauteils synchronisiert sind.

Dieser Aspekt der Erfindung wird im Zusammenhang mit der Fig. 4 beschrieben, wobei es sich um eine stark schematisierte Darstellung handelt. Es geht in diesem Beispiel um ein Zahnrad-Bauteil 10 mit insgesamt 6 Zähnen, d.h. die Zähnezahl n = 6. In Fig. 4 ist das Zahnrad-Bauteil 10 in abgerollter Form dargestellt. In dieser abgerollten Form ähnelt das Zahnrad-Bauteil 10 einer Zahnstange 15, die auch n = 6 Zähne aufweist. Oberhalb der Darstellung der Zahnstange 15 sind die zugehörigen Winkel W in Grad angegeben. In der obersten Zeile der Fig. 4 sind die Zähne von n=1 bis n=6 durchnummeriert.

Da die Sollposition der Zahnflanke der Zähne des Zahnrad-Bauteils 10 bekannt sind (z.B. aus den Auslegungsdaten), kann der Winkelsensor 16 der Vorrichtung 10 ein drehwinkelspezifisches Signal sA1 erzeugen, wie in Fig. 4 unmittelbar unterhalb der Zahnstange 15 gezeigt. Dieses beispielhaft gezeigte drehwinkelspezifische Signal sA1 umfasst lediglich kurze Pulse, die jeweils die Messpunkte für die Teilungsmessung festlegen.

Durch das drehwinkelspezifische Signal sA1 (hier als Funktion des Winkels W aufgetragen) wird der Mess-Sensor 20 getriggert, der nicht in Fig. 4 gezeigt ist. Dieser Mess-Sensor 20 ist jedoch so relativ zum Zahnrad-Bauteil 10 angeordnet, dass der Lichtstrahl LS jeweils die rechten Zahnflanken trifft. Das reflektierte Licht, das von der jeweiligen rechten Flanke zum Mess-Sensor 20 zurückreflektiert wird, wird verarbeitet und erzeugt z.B. ein analoges Mess-Signal Ms. Da in dem gezeigten Beispiel um das mathematisch exakt definierte Model des Soll-Zahnrad-Bauteils handelt, sitzen alle Zahnflanken des Zahnrad-Bauteils 10 exakt an der vorbestimmten Position. Daher erzeugt der Mess-Sensor 20 in diesem theoretischen Fall für jede Flanke das identische Mess-Signal Ms. Im gezeigten Beispiel hat das Mess-Signal Ms eine Amplitude von 5V.

Ein Mess-Signal Ms kann nun bei allen Ausführungsformen z.B. per Hard- und/oder Software ausgewertet werden. Im gezeigten Fall entspricht eine Signalamplitude von 5V einem Teilungsfehler τ von 0 Grad. In der untersten Zeile der Fig. 4 ist daher gezeigt, dass der Teilungsfehler τ für jede der rechten Zahnflanken der Zahnstange 15 als Winkelwert Null Grad beträgt.

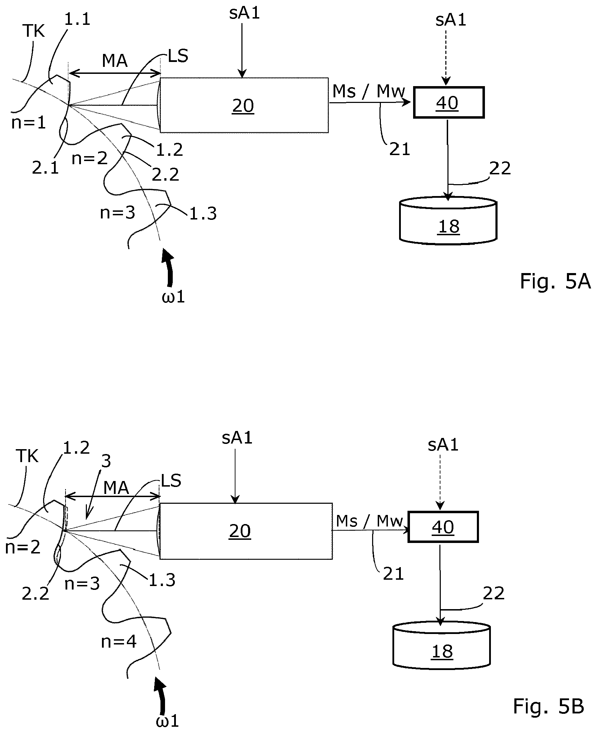

Anhand der Figuren 5A und 5B werden im Folgenden weitere Aspekte beschrieben. In beiden Figuren sind jeweils nur 3 Zähne 1.1, 1.2 und 1.3 eines Zahnrad-Bauteils 10 gezeigt. Der optische Sensor 20, der als Mess-Sensor dient, ist hier lediglich schematisch dargestellt. Er sendet einen Lichtkegel LS in Richtung einer Zahnflanke des Zahnrad-Bauteils 10 aus. Der reflektierte Lichtanteil und der Detektor des optischen Sensors 20 sind nicht separat gezeigt. Der optische Sensor 20 ist im Messabstand MA von dem auf dem Teilkreis TK liegenden Messpunkt der rechten Zahnflanke 2.1 des ersten Zahnes 1.1 angeordnet.

Das Winkelmesssystem 16 (nicht in Fig. 5A und 5B gezeigt) liefert das drehwinkelspezifische Signal sA1. Immer dann, wenn dieses drehwinkelspezifische Signal sA1 beispielsweise den Sensor 20 aktiviert, liefert der Sensor 20 den aktuell gemessenen Abstand zur Zahnflanke in Form eines Mess-Signals Ms und/oder in Form eines digitalen Mess-Wertes Mw. Zu diesem Zweck kann der Sensor 20 bei mindestens einem Teil der Ausführungsformen einen Ausgang 21 aufweisen, wie in Fig. 5A, 5B angedeutet. Aus dem Mess-Signal Ms oder dem Mess-Wert Mw kann der aktuell gemessene Abstand ermittelt werden.

In den Figuren 5A und 5B ist eine alternative Lösung angedeutet. Wie bereits erwähnt, kann entweder der Sensor 20 direkt oder indirekt in einen aktiven Zustand geschaltet werden. In diesem Fall liegt das Signal sA1 z.B. an dem Sensor 20 an, wie in den Figuren 5A und 5B gezeigt. Es ist aber auch möglich eine Schaltung mit dem Signal sA1 zu beeinflussen, die dem Sensor 20 nachgeordnet ist. In den Figuren 5A und 5B dient die Schaltung 40 als nachgeordnete Schaltung, die mittels des Signals sA1 schaltbar ist (in Fig. 5A, 5B ist diese alternative Lösung durch einen gestrichelten Pfeil gezeigt, der mit sA1 beschriftet ist und der zu dem Block 40 zeigt). In diesem Fall wird das Auswerten oder Verarbeiten der Ausgangssignale bzw. -werte Ms oder Mw als aktiver Zustand bezeichnet.

Bei allen Ausführungsformen kann der Abstand ermittelt werden, indem eine Hard- und/oder Software (hier als Auswertevorrichtung 40 bezeichnet) eine Umwandlung oder Umrechnung vornimmt. Die Auswertevorrichtung 40 kann den Abstand (als relativer oder absoluter Wert) über eine Verbindung 22 z.B. an einen (Zwischen-)Speicher 18 übergeben (siehe auch Fig. 2). Im (Zwischen-)Speicher 18 wird dieser Wert vorzugsweise bei allen Ausführungsformen dem jeweiligen Zahn (im gezeigten Beispiel der Fig. 5A dem Zahn n=1) zugeordnet.

In Fig. 5A ist durch den Pfeilbogen ω1 angedeutet, dass sich das Zahnrad-Bauteil 10 kontinuierlich dreht (um die Rotationsachse A1 der Figuren 1, 2 und 3).

Fig. 5B zeigt nun eine nächste Momentaufnahme exakt in dem Zeitpunkt, indem sich das Zahnrad-Bauteil 10 um eine Soll-Teilung τ weitergedreht hat (hier dreht sich das Zahnrad-Bauteil 10 im Uhrzeigersinn). D.h. Fig. 5B zeigt den Moment, indem der nächste Puls des drehwinkelspezifischen Signals sA1 den Sensor 20 erneut aktiviert. Exakt in diesem Moment erreicht das drehwinkelspezifische Signal sA1 den Sensor 20 und der Sensor 20 misst den aktuellen Abstand zur Flanke 2.2 des Zahnes 1.2. In Fig. 5B ist andeutungsweise zu erkennen, dass die Position der rechten Flanke 2.2 des Zahnes 1.2 leicht von der Sollposition abweicht. Die Sollposition ist durch die gestrichelte Linie dargestellt. Sobald das drehwinkelspezifische Signal sA1 bereitgestellt wird, misst der Sensor 20 im gezeigten Anschauungsbeispiel einen Abstand, der etwas grösser ist als der in Fig. 5A am Zahn 1.1 gemessene Abstand. Das liegt daran, dass die rechte Zahnflanke 2.2 des Zahnes 1.2 etwas nacheilt, wenn sich das Zahnrad-Bauteil 10 in Uhrzeigersinn dreht. D.h. bei dem Anschauungsbeispiel der Fig. 5B ist der effektiv gemessene Abstand etwas größer als der Messabstand MA. Man kann auch konstatieren, dass in diesem Anschauungsbeispiel die Zahnlücke 3 weiter ist als die Sollweite.

In Fig. 5B ist zu erkennen, dass die Position auf der Zahnflanke bei der Teilungsmessung (also auf dem dargestellten Teilkreis TK) sehr gut antastbar ist. Selbst der angedeutete "Lichtkegel" des Sensors 20, wie er bei konfokal chromatischen Sensoren typisch ist, wird nicht abgeschattet und der Antastwinkel ist nicht zu flach.

Um auf das Zahlenbeispiel der Fig. 4 zurück zu kommen, würde eine entsprechende Koordinaten-Messvorrichtung 10 in der Situation der Fig. 5A erkennen, dass sich die rechte Flanke 2.1 exakt an der Soll-Position. Das Mess-Signal Ms würde exakt 5 V betragen (5 V entspricht in diesem Beispiel einer Abweichung gegenüber der Sollposition um 0 Grad).

Im Fall der Fig. 5B würde das Mess-Signal Ms beispielweise 5,03V betragen, da hier der Abstand zur Flanke 2.2 etwas größer ist als zuvor. Die Spannung von 5,03 V kann z.B. einer Winkelabweichung von 1' (eine Winkelminute) entsprechen.

Diese Zahlenbeispiele dienen lediglich der Erläuterung und sind nicht als Einschränkung zu verstehen.

Der Messabstand Ma definiert im Zusammenhang mit der Erfindung den idealen Abstand zwischen dem optischen Sensor 20 und der Objektebene OE. Als Objektebene OE dient bei der Verzahnungsmessung in den meisten Fällen eine Zahnflanke des Zahnrad-Bauteils 10. Die Objektebene OE kann bei allen Ausführungsformen der Erfindung auch an einer anderen Stelle des Zahnrad-Bauteils 10 liegen.

Der Messabstand Ma beträgt bei allen Ausführungsformen der Erfindung vorzugsweise zwischen 5 und 100mm. Besonders geeignet sind Sensoren 20, die einen Messabstand Ma im Bereich zwischen 10 und 50mm aufweisen und die bei diesem Messabstand Ma eine Genauigkeit von 0,1µm haben.

Vorzugsweise kommt bei allen Ausführungsformen ein optischer Sensor 20 zum Einsatz, dessen Ausgangssignal innerhalb eines Messbereichs ein lineares Mess-Signal Ms liefern. Ein solches lineares Mess-Signal Ms lässt sich besonders einfach in einen Abstandswert und/oder einen Winkelwert umrechnen (z.B. durch den Einsatz einer Auswertevorrichtung 40).

Vorzugsweise kommt bei allen Ausführungsformen ein optischer Sensor 20 zum Einsatz, der den Lichtstrahl LS als Lichtpunkt auf die Objektebene OE projiziert. Es können bei allen Ausführungsformen aber auch optische Sensoren 20 zum Einsatz kommen, die eine Linie, eine Fläche (z.B. ein flächiges Streifenmuster) oder ein 3-dimensionales Muster (z.B. ein Hologramm) auf die Objektebene OE projizieren.

Vor allem als optische Sensoren 20 geeignet sind:
- messend arbeitende Laser-Triangulations-Sensoren, die einen Laser umfassen, der den Lichtstrahl LS aussendet, und die einen PSD-, CCD-oder CMOS Detektor umfassen (PSD steht für Position Sensitive Detector, CCD für Charge-Coupled Device und CMOS für Complementary Metal-Oxide-Semiconductor). Vorzugsweise umfasst ein solcher Sensor 20 bei mindestens einem Teil aller Ausführungsformen eine Laserdiode mit einem Linsensystem als Lichtquelle und ein weiteres Linsensystem vor dem PSD- oder CCD-Linien-Detektor, um reflektierte Lichtanteile auf den optisch aktiven Bereich des Detektors abzubilden. Als PSD-, CCD- und CMOS-Linien-Detektoren sind Halbleiterstrukturen besonders geeignet, die kompakt sind. Je nach Abstand zwischen dem optischen Sensor 20 und der Objektebene OE, bewegt sich der reflektierte Lichtanteil relativ zum optisch aktiven Bereich des Detektors. Daraus kann der Abstand ermittelt werden.
- messend arbeitende konfokal-chromatische Sensoren, die eine Lichtquelle umfassen, die weißes Licht oder ein Licht mit mehreren Wellenlängenanteilen als Lichtstrahl LS aussendet. Diese Sensoren 20 umfassen eine Linsenanordnung im Strahlengang des Lichtstrahls LS, um die verschiedenen Wellenlängenanteile auf verschiedene Abstände zu fokussieren. Reflektierte Lichtanteile werden dann zu einem Spektrometer geleitet (vorzugsweise über eine optische Fiber), um deren Farbanteile zu analysieren. Die als Maximum analysierte Wellenlänge codiert quasi den Abstand zur Objektebene OE. Falls der Lichtstrahl LS z.B. blaue, grüne und rote Wellenlängenanteile umfasst, so kann ein Maximum des grünen Lichts am Spektrometer den Sollabstand anzeigen. Wenn das Maximum der reflektierten Lichtanteile im blauen Bereich liegt, dann wurde beispielweise ein kurzer Messabstand detektiert. Wenn das Maximum der reflektierten Lichtanteile im roten Bereich liegt, dann wurde beispielweise ein langer Messabstand detektiert.
- messend arbeitende konoskopische Sensoren, die kollinear arbeiten und auf dem Prinzip der Holografie beruhen. Ein solcher konoskopischer Sensor umfasst bei allen Ausführungsformen vorzugsweise einen Laser, der als monochromatische Lichtquelle fungiert. Der Lichtstrahl LS wird in Richtung der Objektebene OE projiziert. Reflektierte Lichtanteile werden durch eine Objektivlinse und ein mehrfachbrechendes Kristall in einen Detektorbereich abgebildet. Dort wird das durch dieses Verfahren erzeugte Interferenzmuster analysiert, um daraus den Abstand zur Objektebene OE zu ermitteln.

Da die Bereiche von Zahnrad-Bauteilen 10, die als Objektebene OE dienen, eine leichte Oberflächenrauigkeit aufweisen, kommt es beim Auftreffen des Lichtstrahles LS anteilig zu einer diffusen Reflektion.

Da es bei Zahnrad-Bauteilen 10 zu Abschattungsproblemen durch benachbarte Zähne kommen kann, sollte bei allen entsprechenden Ausführungsformen beim Einsatz von Laser-Triangulations-Sensoren die Ausrichtung des Triangulationsdreiecks an die Richtung der Zahnlücke angepasst werden.

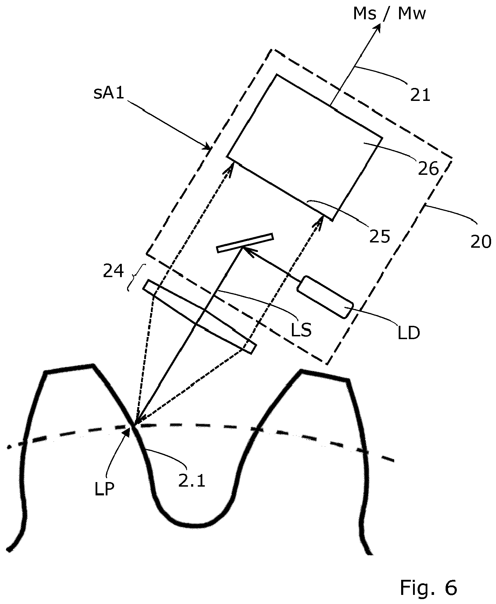

In Fig. 6 ist ein optischer Sensor 20 schematisch gezeigt, der nach dem Prinzip konoskopischer Sensoren arbeitet. Der optische Sensor 20 umfasst eine Laserquelle, vorzugsweise eine Laserdiode LD, die einen Lichtstrahl LS emittiert. Der Lichtstrahl LS wird z.B. an einem Strahlungsteiler 23 in Richtung der Objektebene OE (hier eine Zahnflanke 2.1) umgelenkt. Dort erzeugt der Lichtstrahl LS einen Lichtpunkt LP. An diesem Lichtpunkt LP findet die Abstandmessung statt, indem Lichtanteile, die diffus reflektiert werden, in Richtung der optischen Achse zurückgeführt werden. Der optische Sensor 20 umfasst vorzugsweise eine Linsengruppe oder Abbildungsoptik 24, die in Fig. 6 lediglich durch eine Linse repräsentiert ist. Die Linsengruppe oder Abbildungsoptik 24 dient dazu die Lichtanteile (hier durch strichlierte Linien dargestellt) durch einen doppelbrechenden Kristall auf einen aktiven Detektorbereich 25 eines Detektors 26 abzubilden. Durch diesen speziellen Aufbau entsteht auf dem Detektor ein Interferenzmuster mit der Abstandinformation, das schaltungstechnisch oder rechnerisch ausgewertet wird, um so ein Mess-Signal Ms und/oder einen Mess-Wert Mw für den Abstand zu erhalten. Das Mess-Signal Ms und/oder der Mess-Wert Mw kann z.B. über einen Ausgang 21 bereitgestellt werden.

Wie in Fig. 6 angedeutet, können alle oder ein Teil der Elemente des optischen Sensors 20 zu einer Funktionseinheit zusammengefasst sein. Das Signal sA1 dient auch hier dazu den Sensor 20 zu triggern, wie beschrieben.

Optische Sensoren 20, die nach diesem Prinzip arbeiten, haben den Vorteil, dass der Lichtstrahl LS so geführt oder eingekoppelt wird, dass er koaxial zu den reflektierten Lichtanteilen verläuft. Dadurch lässt sich der Detektorbereich koaxial zum Lichtstrahl LS anordnen. D.h. die optische Achse des Lichtstrahls LS fällt mit der optischen Achse der reflektierten Lichtanteile zusammen. Eine Ausrichtung des Sensors zur Zahnlückenrichtung wie beim Triangulationssensor ist somit nicht erforderlich.

Bei allen Ausführungsformen kann ein Teil der Auswertevorrichtung 40 oder die gesamte Auswertevorrichtung 40 in den optischen Sensor 20, z.B. in das Gehäuse des Sensors 20, integriert sein. In diesem Fall liefert der Sensor über die Verbindung 22 Mess-Daten oder Mess-Werte Mw in digitaler Form.

Bei allen Ausführungsformen kann eine gut/nicht gut Funktion wie folgt vorgesehen sein. Wenn ein optischer Sensor 20, egal welcher Bauform, kein zuverlässiges Signal ermitteln kann, z.B. weil die Restintensität des Lichtanteils, der zurückreflektiert wurde unterhalb einer Empfindlichkeits-schwelle liegt, so kann dieser Sensor 20 an dem Ausgang 21 oder an einem anderen Ausgang ein Warnsignal abgeben. Sobald dieses Warnsignal bereitgestellt wird, weiß die Auswertevorrichtung 40 und/oder die Koordinaten-Messvorrichtung 10, dass für die entsprechende Objektebene OE kein Abstandwert ermittelt werden konnte. In diesem Fall kann die Messprozedur z.B. unterbrochen und dann neu gestartet werden.

Wie bereits erwähnt, ist das Winkelmesssystem/Winkelsensor 16 dazu ausgelegt Signale sA1 bereitzustellen, die eine Aussage über die momentane antriebsseitige Winkelposition des (Dreh-)Tischs 13 und somit des Bauteils 11 zulässt. In Fig. 2 ist das Bereitstellen dieses Signals durch einen gestrichelten Pfeil mit der Bezeichnung sA1 angedeutet. In Fig. 4 ist ein beispielhaftes Signal sA1 als Funktion des Drehwinkels W gezeigt. In den Figuren 5A, 5B und 6 wird das Signal sA1 als Schalt- oder Triggersignal am optischen Sensor 20 angelegt.

Gemäß Erfindung kann die Koordinaten-Messvorrichtung 10 mehrere NC-gesteuerte Achsen umfassen. Im gezeigten Ausführungsbeispiel der Fig. 1 handelt es sich beispielsweise um drei Linearachsen X1, Y1, Z1 und um die bereits erwähnte Rotationsachse A1. Diese Achsen X1, Y1, Z1, A1 sind dazu ausgelegt, relative Zustellbewegungen und/oder relative Messbewegungen des Messaufbaus 17 samt eines daran angebrachten optischen Sensors 20 relativ zum Bauteil 11 auszuführen.

Die in den Figuren 1, 2 und 3 gezeigten Anordnungen der NCgesteuerten Achsen X1, Y1, Z1, A1 sind als Beispiele zu verstehen. Die NCgesteuerten Achsen können auch anders angeordnet sein und die Anzahl NCgesteuerten Achsen kann z.B. auch geringer sein als in den Figuren 1, 2 und 3 gezeigt.

Die eigentliche relative Messbewegung wird durch das Drehantreiben des Zahnrad-Bauteils 11 um die Rotationsachse A1 erzeugt. Daher reicht es im Prinzip aus, wenn die Koordinaten-Messvorrichtung 10 nur die Rotationsachse A1 als gesteuerte Achse aufweist. Eine Abstandsänderung, z.B. durch das linear Zustellen des Sensors mit der Y1-Achse, muss beim eigentlichen Messen nicht stattfinden.

Je nach Definition des drehwinkelspezifischen Signals sA1, kann dieses Signal sA1 z.B. an einem Enable-Eingang eines Gatters anliegen. Falls das Schaltsignal sA1 von einer logischen "0" auf eine logische "1" wechselt, so bewirkt der Enable-Eingang z.B. das Aktivieren des optischen Sensors 20.

Vorzugsweise ist der optische Sensor 20 bei allen Ausführungsformen dazu ausgelegt von dem aktiven Messzustand selbsttätig in einen passiven Messzustand zu wechseln.

Gemäss Erfindung liegt für mindestens einen Teil der Ausführungsformen der Einstrahlwinkel des Lichtstrahls LS bei allen Ausführungsformen vorzugsweise in einem Winkelbereich zwischen ±0 und ±60 Grad, wenn es um das Messen von metallischen Zahnrad-Bauteilen 11 geht.

Ein besonders günstiger Einstrahlwinkel liegt für mindestens einen Teil der Ausführungsformen im Winkelbereich zwischen 0 und ±45 Grad (diese Gradangaben beruhen auf der Annahme, dass ein senkrecht zur Oberfläche einfallender Lichtstrahl LS einem Winkel von 0 Grad entspricht).

Vorzugsweise umfasst die Koordinaten-Messvorrichtung 10 bei mindestens einem Teil der Ausführungsformen eine Art Regelsystem, das aus Hardware und/oder Software aufgebaut ist. Sinn und Zweck dieses Regelsystems ist das Steuern der Relativbewegungen beim Zustellen des optischen Sensors 20 zum Zahnrad-Bauteil 11 und/oder das Ausführen der relativen Messbewegung(en) beim Durchführen der eigentlichen Messung(en).

In Fig. 1 und Fig. 3 sind beispielhaft Software-Module SM als Teil der jeweiligen Steuerung 12 gezeigt, die vorzugsweise Teil oder Kern des genannten Regelsystems ist. Das Software-Modul SM und/oder das Regelsystem ist dazu ausgelegt aus den Sollwinkelpositionen (die durch das Signal sA1 angezeigt werden) und den Mess-Signalen Ms und/oder den Mess-Werten Mw mindestens eine geometrische Angabe (z.B. die Winkelposition einer Zahnflanke bezogen auf die Rotationsachse A1) der Objektebene OE des Zahnrades 11 zu ermitteln.

Die bisherigen Beispiele haben sich primär auf Stirnrad-Bauteile 11 bezogen, da die Messungen am Stirnrad einfacher zu erklären sind. Man kann die Erfindung aber auch zum Messen von Kegelrad-Bauteilen 11, Schneckenrädern, Verzahnwerkzeugen und anderen Zahnrad-Bauteilen 11 einsetzen.

**Bezugszeichen:**

| | |
|---|---|
| Zähne | 1.1, 1.2, 1.3 |
| Zahnflanke | 2.1, 2.2 |
| Zahnlücke | 3 |
| Messgerät / Koordinaten-Messvorrichtung | 10 |
| Zahnrad-Bauteil | 11 |
| Welle | 11.1 |
| NC-Steuerung | 12 |
| (Dreh-)Tisch | 13 |
| Zentriermittel | 14 |
| Arm | 14.1 |
| Verschiebbarkeit | 14.2 |
| Zahnstange | 15 |
| Winkelmesssystem / Winkelsensor / Winkeldekoder | 16 |
| Zeiger | 16.1 |
| Messaufbau / Messanordnung | 17 |
| Speicher | 18 |
| Optischer Sensor / Mess-Sensor | 20 |
| Ausgang | 21 |
| Verbindung | 22 |
| Linsengruppe / Abbildungsoptik | 24 |
| Strahlungsteiler | 23 |
| Detektorbereich | 25 |
| Detektor | 26 |
| Auswertevorrichtung | 40 |
| Rotationsachse | A1 |
| Laserdiode | LD |
| Lichtpunkt | LP |
| Lichtstrahl | LS |
| Messabstand | MA |
| Mess-Signal | Ms |
| Mess-Wert | Mw |
| Zähnezahl | n |
| Objektebene | OE |
| Signale | sA1 |
| Software-Modul | SM |
| Teilkreis | TK |
| Teilungsfehler | τ |
| Koordinaten | x, y, z |
| Linearachsen | X1, Y1, Z1 |
| Relativbewegung parallel zur x Achse | X1 |
| Relativbewegung parallel zur y Achse | Y1 |
| (Dreh-)Winkel | W |
| Relativbewegung parallel zur z Achse | Z1 |
| Drehbewegung | ω1 |

## Patentansprüche

1. Koordinaten-Messvorrichtung (10) mit mindestens einer gesteuerten Achse (A1, X1, Y1, Z1), mit einer Aufnahme (13, 14) für ein zu messendes Zahnrad-Bauteil (11), die um eine der als Rotationsachse (A1) dienenden Achsen drehantreibbar ist, mit einem Winkelsensor (16) und mit einer Messanordnung (17), wobei die Koordinaten-Messvorrichtung (10) dazu ausgelegt ist mittels der mindestens einen gesteuerten Achse (A1, X1, Y1, Z1) Bewegungen der Messanordnung (17) relativ zum Zahnrad-Bauteil (11) auszuführen, **dadurch gekennzeichnet, dass**
- die Messanordnung (17) einen optischen, berührungslos arbeitenden Sensor (20) umfasst, der als Mess-Sensor ausgelegt und so an der Messanordnung (17) angeordnet ist, dass er in der Lage ist einen Lichtstrahl (LS) entlang einer optischen Achse in Richtung einer Objektebene (OE) des Zahnrad-Bauteils (11) auszusenden, wenn dieses in der Aufnahme (13, 14) angeordnet ist,
- der Winkelsensor (16) dazu ausgelegt ist ein drehwinkelspezifisches Signal (sA1) in Abhängigkeit der Drehposition der Aufnahme (13, 14) in Bezug zur Rotationsachse (A1) zu liefern, und dass
- der Mess-Sensor durch das drehwinkelspezifische Signal (sA1) in einem aktiven Zustand betreibbar ist.

2. Koordinaten-Messvorrichtung (10) nach Anspruch 1, **dadurch gekennzeichnet, dass** es sich bei dem aktiven Zustand um einen aktiven Messzustand des Sensors (20) handelt, wobei der Mess-Sensor dazu ausgelegt ist von dem aktiven Messzustand in einen passiven Messzustand zu wechseln.

3. Koordinaten-Messvorrichtung (10) nach Anspruch 1 oder 2, **dadurch gekennzeichnet, dass** es sich bei dem aktiven Zustand um einen aktiven Messzustand des Sensors (20) handelt, wobei die Koordinaten-Messvorrichtung (10) dazu ausgelegt ist anhand des drehwinkelspezifischen Signals (sA1) den Mess-Sensor direkt in den aktiven Messzustand zu schalten.

4. Koordinaten-Messvorrichtung (10) nach Anspruch 1 oder 2, **dadurch gekennzeichnet, dass** es sich bei dem aktiven Zustand um einen aktiven Messzustand des Sensors (20) handelt, wobei die Koordinaten-Messvorrichtung (10) dazu ausgelegt ist, das drehwinkelspezifische Signal (sA1) zusammen mit vorgegebenen Winkelwerten zu verarbeiten, um den Mess-Sensor indirekt in den aktiven Messzustand zu schalten.

5. Koordinaten-Messvorrichtung (10) nach Anspruch 1, **dadurch gekennzeichnet, dass** die Koordinaten-Messvorrichtung (10) dazu ausgelegt ist anhand des drehwinkelspezifischen Signals (sA1) ein Schaltsignal zu erzeugen, um den Mess-Sensor oder eine nachgeordnete Schaltung (40) mittels des Schaltsignals in den aktiven Zustand zu schalten.

6. Koordinaten-Messvorrichtung (10) nach Anspruch 1, **dadurch gekennzeichnet, dass** die Koordinaten-Messvorrichtung (10) eine Schaltung (40) umfasst, die ausgangsseitig des Sensors (20) angeordnet ist, wobei die Koordinaten-Messvorrichtung (10) dazu ausgelegt ist anhand des drehwinkelspezifischen Signals (sA1) die Schaltung (40) in den aktiven Zustand zu schalten.

7. Koordinaten-Messvorrichtung (10) nach einem der vorausgehenden Ansprüche, **dadurch gekennzeichnet, dass** der Mess-Sensor schräg zu der Objektebene (OE) des Zahnrad-Bauteils (11) angestellt ist, wobei der Winkel des Lichtstrahls (LS) zu der Objektebene (OE) vorzugsweise in dem Winkelbereich ±0 bis ±60 Grad liegt.

8. Koordinaten-Messvorrichtung (10) nach einem der vorausgehenden Ansprüche, **dadurch gekennzeichnet, dass** es sich bei dem Mess-Sensor um einen Laserpunktsensor handelt, der einen Laser, vorzugsweise eine Laserdiode (LD), zum Aussenden des Lichtstrahls (LS) umfasst.

9. Koordinaten-Messvorrichtung (10) nach einem der Ansprüche 1 bis 8, **dadurch gekennzeichnet, dass** die Koordinaten-Messvorrichtung (10) zusätzlich umfasst:
- einen Speicher (18), der dazu ausgelegt ist Daten des Winkelsensors (16) und/oder Mess-Werte (Mw) des optischen Sensors (20) zu speichern, sobald der Winkelsensor (16) das drehwinkelspezifische Signal (sA1) bereitstellt.

10. Koordinaten-Messvorrichtung (10) nach einem der Ansprüche 1 bis 8, **dadurch gekennzeichnet, dass** die Koordinaten-Messvorrichtung (10) zusätzlich umfasst:
- ein Software-Modul (SM), das dazu ausgelegt ist Mess-Werte (Mw) des optischen Sensors (20) zu verarbeiten, sobald der Winkelsensor (16) das drehwinkelspezifische Signal (sA1) bereitstellt.

11. Koordinaten-Messvorrichtung (10) nach Anspruch 1, 2 oder 3, **dadurch gekennzeichnet, dass** anhand eines Software-Moduls (SM), das vorzugsweise Teil eines Regelsystems ist, aus Mess-Werten (Mw) des optischen Sensors (20) mindestens eine geometrische Angabe, vorzugsweise eine Positionsangabe, der Objektebene (OE) des Zahnrades (11) ermittelbar ist.

12. Koordinaten-Messvorrichtung (10) nach einem der Ansprüche 1 bis 8, **dadurch gekennzeichnet, dass** anhand eines Software-Moduls (SM), das vorzugsweise Teil eines Regelsystems ist, ein automatisiert ablaufender Messvorgang in der Koordinaten-Messvorrichtung (10) zur Teilungsmessung des Zahnrad-Bauteils (11) durchführbar ist.

13. Verfahren zum Durchführen einer berührungslosen optischen Messung an einem Zahnrad-Bauteil (11) in einer Koordinaten-Messvorrichtung (10) mit den folgenden Schritten:
- Einbringen des Zahnrad-Bauteils (11) in die Koordinaten-Messvorrichtung (10),
- Einrichten der Koordinaten-Messvorrichtung (10), um einen berührungslos arbeitenden, optischen Sensor (20), der als Mess-Sensor ausgelegt ist, in eine Startposition relativ zu einer zu messenden Objektebene (OE) des Zahnrad-Bauteils (11) zu bringen,
- Durchführen einer optischen Messung des Zahnrad-Bauteils (11) unter Einsatz des optischen Sensors (20) mit den folgenden Teilschritten:
o Drehantreiben des Zahnrad-Bauteils (11) um eine Rotationsachse (A1) der Koordinaten-Messvorrichtung (10),
o Bereitstellen eines drehwinkelspezifischen Signals (sA1) mittels eines Winkelsensors (16) in Abhängigkeit von der momentanen Drehposition des Zahnrad-Bauteils (11) um die Rotationsachse (A1),
o Schalten des optischen Sensors (20) oder einer Schaltung (40), die dem optischen Sensor (20) nachgeordnet ist, in einen aktiven Zustand, sobald das drehwinkelspezifische Signal (sA1) das Erreichen einer vorbestimmten Drehposition des Zahnrad-Bauteils (11) anzeigt,
o Erfassen von Mess-Werten (Mw) oder Mess-Signalen (Ms) des optischen Sensors (20) jeweils während des aktiven Zustandes.

14. Verfahren nach Anspruch 13, **dadurch gekennzeichnet, dass** es durchgeführt wird, um eine Teilungsmessung des Zahnrad-Bauteils (11) vorzunehmen.
